# EUROPEAN PATENT APPLICATION

(11) **EP 4 759 855 A1**
(43) Date of publication of application: **17.06.2026**
(21) Application number: 25221527.2
(22) Date of filing: 08.12.2025
(51) Int. Cl.: C08G 18/64, C08G 71/04, C08L 75/04, C09J 175/04

(54) **NON-ISOCYANATE POLYURETHANES FROM POLYPHENOL EXTRACTS**

(30) Priority: 13.12.2024 CH 13872024
(71) Applicant: Berner Fachhochschule - Biel Architektur, Holz und Bau, 2500 Biel (CH)
(72) Inventor: Mayer, Ingo, 2542 Pieterlen (CH); Olaechea, Luis, 1700 Fribourg (CH); Holmes, Christopher M., 4512 Bellach (CH); Frei, Reto, 2533 Evilard (CH)
(74) Representative: Rentsch Partner AG

(57) **Abstract**

The present disclosure relates to a process for producing a polyurethane composition, comprising the steps of: a) providing a polyphenol extract selected from a tannin extract, a lignin extract or a mixture thereof; b) reacting the polyphenol extract with a carbonating agent to provide a carbonate intermediate; and c) reacting the carbonate intermediate with a diamine comprising two or more amino groups, to provide the polyurethane composition. Further disclosed are polyurethane compositions and their uses.

## Description

### FIELD OF THE DISCLOSURE

The present disclosure relates to polyurethane compositions, their uses and processes for producing them.

### BACKGROUND OF THE DISCLOSURE

Polyurethanes are a diverse class of polymers that can be used for different application and may be engineered to have different mechanical properties. Most polyurethanes are synthesized from isocyanate-based starting materials. However, isocyanates are toxic and harmful to the environment. Similarly, the precursors involved in the syntheses, e.g. phosgene, are also highly toxic.

Unlike the production of isocyanates, which is well controlled by the authorities, their use by customers is more difficult to control in order to ensure safe practices, e.g. when using isocyanate-based adhesives. Regulatory efforts to reduce the risk of inappropriate and/or hazardous handling have increased, including e.g. the European REACH regulation. To ensure this low diisocyanate content, manufacturers will have to develop their syntheses in order to increase the percentage of dimer and trimers at the expense of monomeric diisocyanates. Though safer than the monomeric isocyanates, these dimers and trimers are also toxic. For example, diisocyanates are a major cause of work-related asthma and can cause permanent changes in the lungs after repeated exposure. Safe alternatives to isocyanates and diisocyanates remain a major challenge in the synthesis of polyurethanes.

It is therefore desirable to provide non-isocyanate routes to polyurethanes (non-isocyanate polyurethane, NIPU). However, the NIPU's known to date are scarce and suffer from several disadvantages. One disadvantage is the poor water solubility of most known NIPU's, which greatly reduces their industrial applicability and their environmental implant. Indeed, many known NIPU's require organic solvents for solubilization. A further disadvantage of the known NIPU's is their limited stability over time, which greatly reduces their storage stability and shelf life.

Yet a further disadvantage is that many known NIPU's derive from adverse raw materials, e.g. unsustainable raw materials, environmentally unfriendly raw materials (e.g. petroleum-based raw materials) or scarce raw material otherwise needed in the food industry, thereby establishing an undesirable competition with food supply. Another disadvantage of the known non-isocyanate routes is that they are limited to certain material properties and thereby certain industry applications. It is still difficult to produce polyurethanes that are amenable to a broad range of different applications.

Consequently, there is a need to improve the known processes for producing polyurethanes and the known polyurethane products, particularly regarding water solubility, storage stability and sustainability.

### SUMMARY OF THE DISCLOSURE

It is an object of the present disclosure to provide polyurethane compositions and processes for producing polyurethane compositions that address at least some of the disadvantages of the prior art. Advantageously, it is an object of at least some embodiments to provide polyurethane compositions, preferably non-isocyanate polyurethane compositions, that are water soluble. Preferably, it is an object of at least some embodiments to provide (preferably non-isocyanate) polyurethane compositions having high storage stability respectively a long shelf life. In at least some embodiments, it is an object to provide a process for producing (preferably non-isocyanate) polyurethanes which relies on raw materials that are sustainable and/or cheap and/or readily available and/or regionally available in Europe. Advantageously, the CO₂ footprint would be reduced compared to the known polyurethane producing processes, including the known non-isocyanate polyurethane producing processes. It is a further object of at least some embodiments to provide non-isocyanate polyurethane compositions that are amenable to a broad range of applications and uses, including for example as insulation materials or in the produce of particleboards.

The general object is addressed by the subject-matter of the independent claims. Further favorable embodiments follow from the dependent claims and the overall disclosure. The following summary is provided to introduce the reader to the more detailed discussion to follow. It is not intended to limit the disclosure to certain embodiments.

The present disclosure provides in a first aspect, among other aspects and embodiments, a process for producing a polyurethane composition. The process comprises the steps of:
a. Providing a polyphenol extract selected from a tannin extract, a lignin extract or a mixture thereof;
b. Reacting the polyphenol extract with a carbonating agent to provide a carbonate intermediate;
c. Reacting the carbonate intermediate with a diamine comprising two or more amino groups, to provide the polyurethane composition.

One advantage of this process is that it allows producing non-isocyanate polyurethane compositions using widely available and sustainable raw materials. In particular, the polyphenol extracts used (lignin extract / tannin extract) are also widely available in Europe, including central continental Europe. Additionally, water is a possible solvent that may be used in the process. A further advantage is that the resulting polyurethane compositions are water soluble and display a high storage stability, e.g. allowing storage for one month or even longer.

In a typical embodiment, the tannin extract has a dry weight content of carbohydrates of at least 5 wt.-%. The inventors have found that in particular for the tannin extract, it is highly preferable to use a tannin extract that comprises a certain minimum amount of carbohydrates, preferably bound carbohydrates. The minimum amount of carbohydrates allows the successful formation of polyurethane, including in aqueous solvent. Using tannin extracts comprising a certain amount of carbohydrates may seem undesirable or counterintuitive at first because it precludes some of the more traditionally used sources of tannin extracts that contain less carbohydrates, in particular less bound carbohydrates. Without withing to be bound to a theory, the carbohydrates present in the tannin extract could potentially contribute reactive hydroxyl groups (e.g. aliphatic hydroxyl groups) that can react with the carbonating agent and, eventually, with the diamine to form the polyurethane linkages in the polyurethane composition.

The present disclosure further provides in a second aspect, among other aspects and embodiments, a polyurethane composition produced according to the process of any of the embodiments of the process described herein.

The present disclosure further provides in a third aspect, among other aspects and embodiments, an adhesive formulation comprising the polyurethane composition according to any of the embodiments described herein.

The present disclosure further provides in a fourth aspect, among other aspects and embodiments, different uses of the polyurethane composition described herein, as well as different uses of the adhesive formulation described herein.

### BRIEF DESCRIPTION OF THE DRAWINGS

The invention described herein will be more fully understood from the detailed description given herein below and the accompanying drawings which should not be considered limiting to the invention described in the appended claims. The drawings show:

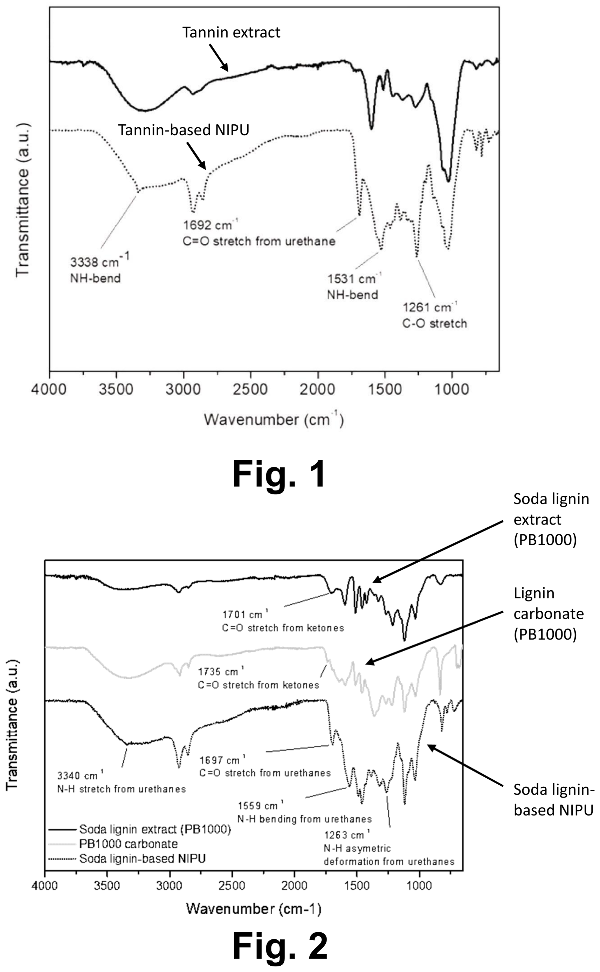

Fig. 1 shows a stacked Fourier-transform infrared spectroscopy (FTIR) spectrum of a tannin extract used in the process described herein (abbreviated in the figure as "BFH tannin", black line) and of a tannin-based NIPU produced according to an embodiment of the process described herein (dashed grey line);
Fig. 2 shows a stacked FTIR spectrum of the soda lignin extract used in the process described herein (abbreviated in the figure as "PB1000", black through-going line), of a carbonate intermediate formed during an embodiment of the process described herein (which was isolated by precipitation in acetone and is abbreviated in the figure as "lignin carbonate", grey line), and of the lignin-based NIPU produced in an embodiment of the process described herein (abbreviated in the figure as "LigninNIPU", dotted black line);

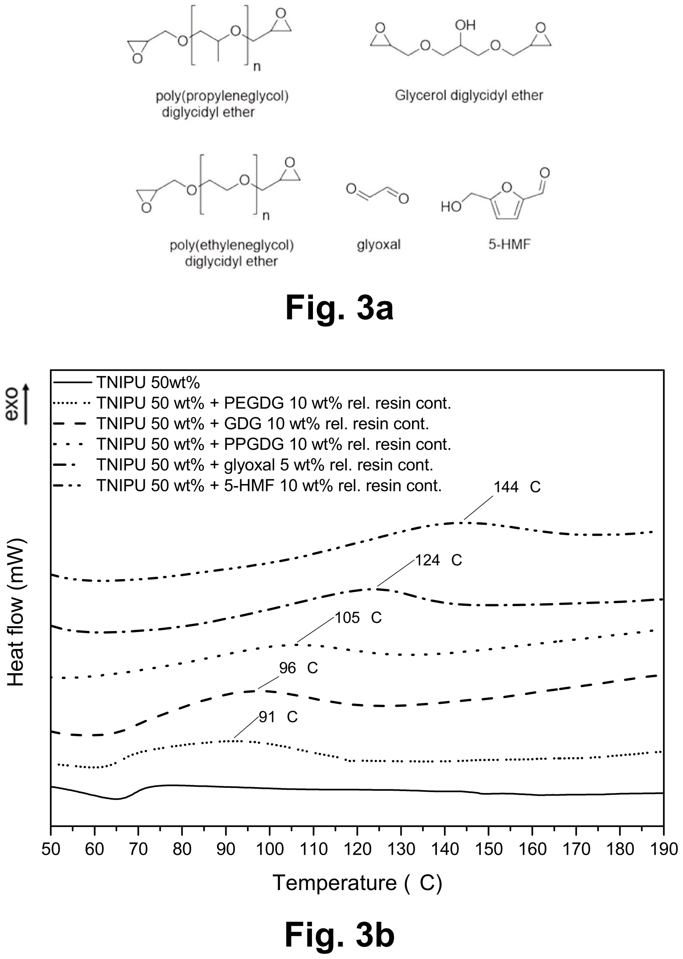

Fig. 3a shows the names and chemical structures of different hardeners tested in conjunction with the polyurethane composition described herein;
Fig. 3b shows the differential scanning calorimetry (DSC) thermograms obtained for different polyurethane compositions with or without different hardeners (performed using stainless steel high-pressure pans (30 microliter); the different formulations tested are indicated in Fig. 3b; all weight percent indications in Fig. 3b are relative to the solid content);

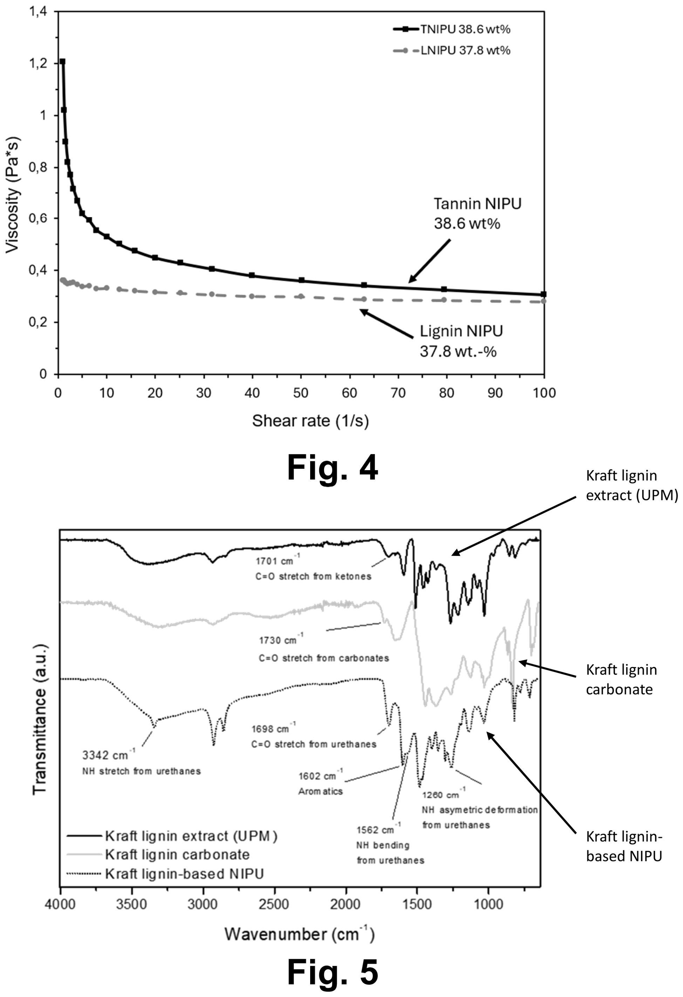

Fig. 4 shows the viscosity as a function of shear rate, as determined for tannin-based NIPU (black through-going line) and for lignin-based NIPU (grey dashed line);
Fig. 5 shows a stacked FTIR spectrum of the kraft lignin extract used in the process described herein (abbreviated in the figure as "UPM", black through-going line), of a carbonate intermediate formed during an embodiment of the process described herein (grey line), and of the lignin-based NIPU produced in an embodiment of the process described herein (abbreviated in the figure as "NIPU", dotted black line).

### DETAILED DESCRIPTION OF THE DISCLOSURE

### Definitions

Unless defined otherwise, all technical and scientific terms used herein have the same meaning as commonly understood by one of ordinary skill in the art to which the disclosure pertains. Although any methods and materials similar to or equivalent to those described herein can be used in the practice or testing of the present disclosure, the preferred methods and materials are described herein.

In describing the embodiments and claiming the disclosure, the following terminology will be used in accordance with the definitions set out below.

The terms "carbohydrate" or "carbohydrates", as used herein, refer to the group of molecules commonly referred to by the skilled person as carbohydrates. They tend to essentially consist of carbon, hydrogen and oxygen atoms, typically conforming to the rough empirical formula CₘH₂ₙOₙ (where m may or may not be different from n). As the skilled person knows, some compounds (such as uronic acids, deoxy sugars such as fucose) do not confirm to this precise stoichiometric definition but are nonetheless considered carbohydrates. Conversely, although compounds like formaldehyde and acetic acid do conform to the definition, they are not considered carbohydrates. In general, as used herein, the terms "carbohydrate" or "carbohydrates" refer to monosaccharides, disaccharides, oligosaccharides and polysaccharides. It is understood that the respective mono-, di-, oligo- and polysaccharides can be present in the sample e.g. as single molecules or bonded to other entities or molecules of the sample. For example, single glucose molecules constitute "monosaccharides" just as much as "glycosyl groups" bonded to other entities or larger molecules (e.g. phenolic glycosyl residuals) do.

Oligosaccharides, as used herein, refers to polymers that include from three to ten monosaccharide units (i.e. 3, 4, 5, 6, 7, 8, 9 or 10 monosaccharide units). In some embodiments, "oligosaccharides", as used herein, refers more specifically to polymers that include from three to six monosaccharide units.

The amount of carbohydrates in a given polyphenol extract (e.g. in a tannin extract or a lignin extract) and other properties relating to the carbohydrates may be determined in different ways. In preferred embodiments, the parameters described herein (in particular those parameters relating to the amount or weight of carbohydrates in an extract) are determined according to the High-Performance Anion Exchange Chromatography Borat method (HPAEC-Borate). Preferably, the HPAEC-Borate assay is measured on the respective extracts after acid hydrolysis.

As used herein, the term "dry weight" of a given compound or composition (e.g. tannin extract, etc.) refers to a weight of the given compound or composition in a dry state. The dry state is typically achieved by freeze-drying.

As used herein, the term "about," when referring to a value or to an amount of mass, weight, time, volume, concentration, percentage or a physical dimension such as length, width, or diameter, is meant to encompass variations of in some embodiments ±20%, in some embodiments ±10%, in some embodiments ±5%, in some embodiments ±1%, in some embodiments ±0.5%, and in some embodiments ±0.1% from the specified value or amount, as such variations are appropriate to perform the disclosed methods.

### Process for producing a polyurethane composition

A first aspect of the present disclosure relates to a process for producing a polyurethane composition, preferably a non-isocyanate polyurethane composition. The process includes the steps of:
a. Providing a polyphenol extract selected from a tannin extract, a lignin extract or a mixture thereof;
b. Reacting the polyphenol extract with a carbonating agent to provide a carbonate intermediate;
c. Reacting the carbonate intermediate with a diamine comprising two or more amino groups, to provide the polyurethane composition.

The polyphenol extract used in the process is an extract comprising polyphenols. The polyphenol extract is typically a plant extract, i.e. the polyphenol extract was produced by extraction of a plant or plant material. For example, the polyphenol extract could be a bark extract. The polyphenol extract is selected from a tannin extract having a dry weight content of carbohydrates of at least 5 wt.-%, a lignin extract or a mixture thereof. Thus, typically, the polyphenol extract essentially consists of the tannin extract, the lignin extract or a mixture thereof. Depending on the application, different mixtures can be used.

In some embodiments, the polyphenol extract comprises or consists of the tannin extract. For example, in some embodiments, the polyphenol extract comprises at least 5 wt.-% of the tannin extract, preferably at least 25 wt.-%, more preferably at least 50 wt.-%, even more preferably at least 75 wt.-%. Alternatively or in combination, in some embodiments, the polyphenol extract comprises or consists of the lignin extract. For example, in some embodiments, the polyphenol extract comprises at least 5 wt.-% of the lignin extract, preferably at least 25 wt.-%, more preferably at least 50 wt.-%, even more preferably at least 75 wt.-%. Alternatively or in combination, in some embodiments, the polyphenol extract consists of the tannin extract and the lignin extract.

One advantage of the method disclosed herein is that a broad range of lignin extracts can be used. Depending on the application and the intended use of the final polyurethane composition, different lignin extracts can be used. For example, the lignin extract can comprise or consist of soda lignin. Alternatively or in combination, the lignin extract can comprise or consist of kraft lignin. In some embodiments, the lignin extract comprises a mixture of kraft lignin and soda lignin. While kraft lignin is widely available and cheap, it has been found less desirable for certain applications due to its relatively poor solubility and the typically comparatively high sulfur content, which may make the polyurethane composition odorous. Thus, while kraft lignin may be advantageous for cheap polyurethane compositions, other lignin extracts may be more desirable for other applications.

Lignin extracts are in general highly compatible with the process described herein. While not wishing to be bound to a theory, it is hypothesized that lignin extracts tend to naturally include a high number of (preferably aliphatic) hydroxyl groups available for carbonation. Such hydroxyl groups may for example derive from carbohydrates. Thus, depending on the application, the lignin may include different carbohydrate contents.

Tannin extracts can also be used in the process described herein. In particular, the process described herein allows tannin extracts to be used that derive from softwood barks regionally available in Europe, especially in central Europe, such as Silver fir, European larch, Norway spruce, Douglas fir or Scots pine. Therefore, the process can e.g. be used to produce biobased non-isocyanate polyurethane compositions in an environmentally friendly and sustainable fashion.

Preferably, the tannin extracts used in the process described herein have a certain minimum content of carbohydrates. In some embodiments, the tannin extract has a dry weight content of carbohydrates of at least 5 wt.-%. In some embodiments, the tannin extract has a dry weight content of carbohydrates of at least 10 wt.-%, preferably from 10 wt.-% to 70 wt.-%, more preferably from 15 wt.-% to 50 wt.-%. It is understood that the ranges provided herein refer to all carbohydrates, including bound and free carbohydrates.

One advantage of these embodiments is e.g. that the resulting tannin extract and its further reaction products still display sufficient water solubility. For example, when reducing the dry weight content of carbohydrates, it was observed that the water solubility of either the tannin extract or of the reaction mixture resulting from reaction of the tannin extract with the carbonating agent (or the diamine) will display poor water solubility, which may result in phase separation and poor results.

Depending on the application, the tannin extract may comprise carbohydrates in different forms. For example, the tannin extract may comprise bound carbohydrates and/or free carbohydrates. Bound carbohydrates are carbohydrates that are chemically bound to the tannins in the tannin extract, e.g. through covalent bonds or ionic bonds, but preferably through covalent bonds. In other words, in at least some embodiments, bound carbohydrates refer specifically to carbohydrates covalently bound to the tannins in the tannin extract. For example, the bound carbohydrates typically include polysaccharides and phenolic glycosyl residues. The bound carbohydrates can e.g. be bound to condensed tannins in the tannin extract. Free carbohydrates, on the other hand, are typically not covalently bound to the tannins in the tannin extract. The free carbohydrates may e.g. include mono-, di- and oligosaccharides. The amount of bound and free carbohydrates in a tannin extract may e.g. be determined as described in: S. Bianchi et al., "Characterization of condensed tannins and carbohydrates in hot water bark extracts of European softwood species", Phytochemistry 2015, 120, 53.

It has been found that it is particularly advantageous to use tannin extracts having a certain minimum amount of bound carbohydrates in the present process. In particular, using these kinds of tannin extracts ensures sufficient water solubility throughout the process and yielded polyurethane products with good storage stability. In some embodiments, the tannin extract has a dry weight content of bound carbohydrates of at least 3 wt.-%, preferably from 5 wt.-% to 70 wt.-%, more preferably from 5 wt.-% to 55 wt.-%, even more preferably from 8 wt.-% to 50 wt.-%. As explained above, these ranges may refer e.g. to covalently bound and ionically bound carbohydrates, but preferably, these embodiments refer more specifically to covalently bound carbohydrates.

Depending on the application, the tannin extract used in the process can comprise mixtures of free and bound carbohydrates. For quantification purposes, a ratio by weight of free carbohydrates to bound carbohydrates may be used. This ratio is typically determined in a dry state, i.e. it refers to a dry weight of free carbohydrates and a dry weight of bound carbohydrates. For example, in some embodiments,

the tannin extract comprises bound carbohydrates and free carbohydrates in a ratio by weight of at least 1:5, preferably at least 1:3, more preferably from 1:3 to 20:1, even more preferably from 1:2 to 10:1. It is understood that in these ranges, the first number refers to the weight of bound carbohydrates and the second number refers to the weight of free carbohydrates. These ranges were found to allow good water solubility and ensure high storage stability of the polyurethane products. A further advantage is that these ranges are compatible with tannin extracts from softwood barks that are regionally available in Europe.

It is understood that the tannin extract comprises tannins. Depending on the application, the tannin extract may have different chemical compositions. For example, the tannin extract may comprise condensed tannins and/or hydrolyzable tannins and/or phlorotan-nins. Typically, the tannin extract comprises at least condensed tannins. Optionally, the tannin extract may additionally comprise hydrolyzable tannins. Depending on the application, the tannin extract may comprise different amounts of condensed tannins. In some embodiments, the tannin extract has a dry weight content of condensed tannins of at least 10 wt.-%, preferably at least 20 wt.-%. In some embodiments, the tannin extract has a dry weight content of condensed tannins of at least 40 wt.-%, such as at least 60 wt.-%.

Alternatively or in combination, the tannin extract may have a dry weight content of phenolic compounds of at least 10 wt.-%, preferably from 10 wt.-% to 90 wt.-%. In some embodiments, the tannin extract has a dry weight content of phenolic compounds of at least 15 wt.-%, preferably from 15 wt.-% to 90 wt.-%. The dry weight content of phenolic compounds in the tannin extract may e.g. be determined as described in: S. Bianchi et al., "Characterization of condensed tannins and carbohydrates in hot water bark extracts of European softwood species", Phytochemistry 2015, 120, 53. Thus, the content of phenolic compounds may e.g. refer to grams of (-)-epicatechin equivalents.

Depending on the application, the tannin extract may be extracted from different sources. For example, the tannin extract may be extracted from plants or plant parts, preferably from bark. In some embodiments, the tannin extract is an extract of a softwood species, preferably a softwood species selected from one or more of the following: Silver fir *(Abies albai*)*,* European larch (*Larix decidua*), Norway spruce (*Picea abies*), Douglas fir (*Pseudotsuga menziesii*) and Scots pine (*Pinus sylvestris*). Preferably, the tannin extract is an extract of the bark of a softwood species, preferably of the bark of one or more of the following species: Silver fir (*Abies albai*), European larch (*Larix decidua*), Norway spruce (*Picea abies*), Douglas fir (*Pseudotsuga menziesii*) and Scots pine (*Pinus sylvestris*)*.* One advantage of these embodiments is that surprisingly, they provide for a particularly good water solubility throughout the process described herein and result in polyurethane compositions having high storage stability.

As explained above, it has also been observed that good water solubility and high storage stability of the polyurethane products are achieved when using tannin extracts having a certain content of carbohydrates. The carbohydrate content may optionally be quantified for the bark as well. For example, in some embodiments, the tannin extract is extracted from a bark having a dry weight content of carbohydrates of at least 5 g, preferably from 8 g to 100 g per kg of dry bark. Alternatively or in combination, in some embodiments, the tannin extract is extracted from a bark having a dry weight content of bound carbohydrates of at least 5 g, preferably from 5 g to 50 g per kg of dry bark.

Depending on the application, the tannin extract may be obtained through different extraction methods. In some embodiments, the tannin extract is obtained by extraction of bark (preferably in the form of flakes or in chopped or milled form, more preferably milled bark) using hot water. Preferably, water at a temperature of at least 40 °C is used for the extraction, more preferably at least 50 °C, e.g. from 50 °C to 80 °C. In some embodiments, the tannin extract is obtained by extracting milled bark using water at 60 °C. For example, the tannin extract may be obtained by bark extraction as described in the following report: S. Bianchi et al., "Characterization of condensed tannins and carbohydrates in hot water bark extracts of European softwood species", Phytochemistry 2015, 120, 53. The same specifications may optionally also be applied to the lignin extract.

In the process described herein, the polyphenol extract is reacted with a carbonating agent to provide a carbonate intermediate. Typically, this reaction is a transesterification reaction in which some of the hydroxyl groups in the polyphenol extract react with the carbonating agent. Thus, in a typical embodiment, the polyphenol extract and the carbonating agent are reacted in a transesterification reaction to provide a carbonate intermediate. Depending on the application, different hydroxyl groups (-OH) in the polyphenol extract may react with the carbonating agent. In a preferred embodiment, aliphatic hydroxyl groups predominantly undergo the reaction with the carbonating agent. Thus, typically, the polyphenol extract comprises aliphatic hydroxyl groups for reaction with the carbonating agent. Without wishing to be bound to a theory, it may be hypothesized that primarily the aliphatic hydroxyl groups are carbonated in the reaction rather than e.g. phenolic hydroxyl groups. For example, in some embodiments, at least 5%, preferably at least 10%, more preferably at least 25%, even more preferably at least 50%, even more preferably at least 75%, particularly at least 90%, of all hydroxyl groups that are carbonated in step b) are aliphatic hydroxyl groups.

One advantage of the process described herein is that it allows manufacturing non-isocyanate polyurethane compositions. Thus, in some embodiments, the reaction in step b) and/or the reaction in step c) are performed in the absence of isocyanates. In other words, in some embodiments, the polyphenol extract is reacted with the carbonating agent in the absence of isocyanates. Alternatively or in combination, in some embodiments, the carbonate intermediate is reacted with the diamine in the absence of isocyanates. Thus, in some embodiments, the polyurethane composition produced according to the process described herein is free of isocyanates. As used herein in this context, "free of isocyanate" respectively "in the absence of isocyanate" may mean that the polyurethane composition respectively the respective reaction mixture comprises less than 1 wt%, preferably less than 0.1 wt%, more preferably less than 0.01 wt%, even more preferably less than 0.001 wt%, even more preferably less than 0.0001 wt%, even more preferably less than 0.00001 wt%, even more preferably less than 0.000001 wt%, even more preferably less than 0.0000001 wt%, even more preferably less than 0.00000001 wt%, isocyanates. Isocyanate as used herein is any compound comprising at least one isocyanate group, i.e. -N=C=O. In some embodiments, the term "isocyanate" may in particular refer to isocyanate monomers and/or molecules comprising an isocyanate group and having a molecular weight of less than 1'500 g/mol, preferably less than 500 g/mol, more preferably less than 100 g/mol.

Depending on the application, different solvents may be used in the different reactions of the process described herein. In some embodiments, step b) (i.e. reacting the polyphenol extract with a carbonating agent) is at least partially performed in a polar solvent, preferably in a polar protic solvent, more preferably water. Preferably, step b) is fully performed in said solvent. Alternatively or in combination, in some embodiments, step c) (i.e. reacting the carbonate intermediate with the diamine) is at least partially performed in a polar solvent, preferably in a polar protic solvent, more preferably water. Preferably, step c) is fully performed in said solvent. In some embodiments, steps b) and c) are performed in a polar solvent, preferably in a polar protic solvent, more preferably water.

Depending on the application, different polar solvents may be chosen. In some embodiments, the polar solvent is a polar protic solvent. For example, the polar solvent may be selected from water, one or more C₁₋₆ alcohols, acetonitrile, dimethyl sulfoxide, sulfolane, dimethylformamide, or a mixture thereof. C₁₋₆ alcohol as used herein denotes linear or branched C₁₋₆ alkanes substituted with at least one -OH group, preferably substituted with one -OH group, two -OH groups or three -OH groups. Preferably, the C₁₋₆ alcohol is selected from one or more of the following: methanol, ethanol, n-propanol, iso-propanol, n-butanol, iso-butanol, tert-butanol or ethylene glycol. Preferably, the C₁₋₆ alcohol is selected from methanol, ethanol, ethylene glycol or a mixture thereof. More preferably, the C₁₋₆ alcohol may be ethylene glycol. In some embodiments, the polar solvent comprises at least 10 vol%, preferably at least 30 vol%, more preferably at least 50 vol%, even more preferably at least 70 vol%, even more preferably at least 90 vol%, even more preferably at least 95 vol%, even more preferably at least 99 vol%, water. The indicated percentage "vol%" refers to the volume of water with respect to the total volume of solvent. In some embodiments, the solvent is, i.e. consist of, water.

The polar solvent as described in the previous paragraph may be chosen independently for steps b) and c). Thus, for example, in some embodiments, the solvents used in steps b) and c) may be essentially identical, or they may be different. It is also possible that a composition of the solvent and/or a concentration of the solvent may differ for steps b) and c). Thus, in some embodiments, for example, the solvent in step b) may comprise at least 90 vol% water, preferably at least 99 vol% water, while in some embodiments, the solvent in step c) may be different and comprise at least 50 vol% water and optionally additionally another solvent. In some embodiments, in step b), the polyphenol extract is reacted with the carbonating agent in a solvent comprising at least 50 vol% water, preferably at last 70 vol% water, more preferably at least 90 vol% water. Alternatively or in combination, in some embodiments, in step c), the carbonate intermediate is reacted with the diamine in a solvent comprising at least 50 vol% water, preferably at least 70 vol% water. In some embodiments, steps b) and c) are performed in water.

The process described herein includes at least a step of b) (reacting the polyphenol extract with a carbonating agent) and c) (reacting the carbonate intermediate with the diamine). Depending on the application, these steps (and optionally any further steps) may or may not be performed in a one-pot fashion. Preferably, the carbonate intermediate of step b) is subjected to step c) without intermediate isolation.

Optionally, the carbonate intermediate of step b) may or may not be subjected to further intermediate steps. For example, in some embodiments, it could be desirable to modify or change the solvent or concentration. Thus, in some embodiments, the carbonate intermediate obtained in step b) is concentrated before being subjected to step c), e.g. by removing at least a portion of the solvent. However, in some embodiments, the carbonate intermediate obtained ins step b) is directly subjected to step c), preferably without intermediate isolation.

Typically, the polyphenol extract is reacted with the carbonating agent in the presence of a base. For example, a hydroxide or a carbonate may be used, such as sodium hydroxide, potassium hydroxide, sodium carbonate, potassium carbonate or a mixture thereof. Preferably, sodium hydroxide or potassium carbonate or a mixture thereof is used.

Depending on the application, different reaction conditions may be used for the reaction of the polyphenol extract with the carbonating agent. In some embodiments, the polyphenol extract is reacted with the carbonating agent for less than 5 hours, preferably from 5 minutes to 2 hours. Alternatively or in combination, in some embodiments, the carbonate intermediate is reacted with the diamine for less than 5 hours, preferably from 5 minutes to 2 hours. For example, in some embodiments, the polyphenol extract is reacted with the carbonating agent for about 1 hour, and the carbonate intermediate is subsequently reacted with the diamine for about 1 hour. The indicated reaction times were found to provide polyurethane products with good properties and, in particular, good storage stability.

Depending on the application, different reaction temperatures may be chosen. For example, in some embodiments, the polyphenol extract is reacted with the carbonating agent at a temperature of at least 40 °C, preferably from 45 °C to 90 °C, more preferably at 65-70 °C.

Alternatively or in combination, in some embodiments, the carbonate intermediate is reacted with the diamine at a temperature of at least 60 °C, preferably from 65 °C to 110 °C, such as 85-90 °C.

Depending on the application, different stoichiometric ratios may be chosen for the reaction of the polyphenol extract with the carbonating agent. In some embodiments, the polyphenol extract is reacted with the carbonating agent in an amount of at least 30 parts per weight, preferably from 45 to 90 parts per weight, e.g. from 64 to 70 parts per weight, of carbonating agent per 100 parts of polyphenol extract. Alternatively or in combination, in some embodiments, the carbonate intermediate is reacted with the diamine in an amount of at least 20 parts per weight, preferably from 25 to 65 parts per weight, of diamine per 100 parts of polyphenol extract.

Depending on the application, different carbonating agents may be used for the reaction with the polyphenol extract. As used herein, a carbonating agent is an agent configured for reacting with an -OH group to form a carbonate group. Preferably, an acyclic carbonate group is formed. Furthermore, the -OH group with which the carbonating agent is configured to react is preferably an aliphatic -OH group. In some embodiments, the carbonating agent comprises or consist of a compound R¹-O-C(O)-O-R² (or optionally a precursor thereof), wherein R¹ and R² are independently chosen from aliphatic and aromatic substituents, wherein R¹ and R² may optionally form a ring. In some embodiments, R¹ and R² may independently be chosen from linear or branched C₁₋₆ alkyl, C₃₋₆ cycloalkyl, C₆₋₁₀ aryl or C₆₋₁₀ heteroaryl, wherein R¹ and R² may optionally form a ring with each other. In some embodiments, the carbonating agent may comprise or consist of a cyclic or acyclic dialkyl carbonate (or precursor thereof), a cyclic or acyclic alkyl aryl carbonate (or precursor thereof), a cyclic or acyclic diaryl carbonate (or precursor thereof), or a mixture thereof. In some embodiments, the carbonating agent may comprise or consist of a (cyclic or acyclic) dialkyl carbonate or precursor thereof, preferably dimethyl carbonate, diethyl carbonate, ethylmethyl carbonate, ethylene carbonate, propylene carbonate or a mixture thereof. For example, the carbonating agent may comprise or consist of an acyclic dialkyl carbonate or precursor thereof, preferably consist of a (cyclic or acyclic) dialkyl carbonate or precursor thereof, preferably dimethyl carbonate, diethyl carbonate, ethylmethyl carbonate, ethylene carbonate, propylene carbonate or a mixture thereof. In some embodiments, the carbonating agent is dimethyl carbonate.

The term precursor as used herein denotes any compound which, under the reaction conditions, is converted into a respective target compound. For example, a precursor of compound R¹-O-C(O)-O-R² is any compound which under the reaction conditions is converted into R¹-O-C(O)-O-R². Similarly, a dialkyl carbonate precursor is any compound which under the reaction conditions is converted into a dialkyl carbonate.

By reacting the polyphenol extract with the carbonating agent, a carbonate intermediate is formed. Typically, the carbonate intermediate bears at least one -O-C(O)-O-R³ group, wherein R³ is for each occurrence independently selected from C₁₋₆ alkyl, C₃₋₆ cycloalkyl, C₆₋₁₀ aryl or C₆₋₁₀ heteroaryl, preferably selected from C₁₋₆ alkyl or C₆₋₁₀ aryl. More preferably, R³ may for each occurrence independently be selected from methyl, ethyl, (2-hydroxy)ethyl, n-propyl or (1-hxdroxy)prop-2-yl. In a preferred embodiment, the carbonate groups formed in step b) are acyclic carbonate groups.

In some embodiments, the polyphenol extract comprises a plurality of aliphatic alcohols (preferably primary or secondary alcohols) which are carbonated in step b). Thus, in some embodiments, the carbonate intermediate may comprise a plurality of -CH₂-O-C(O)-O-R³ groups and/or 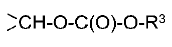 groups, wherein R³ is for each occurrence independently selected from C₁₋₆ alkyl, C₃₋₆ cycloalkyl, C₆₋₁₀ aryl or C₆₋₁₀ heteroaryl, preferably selected from C₁₋₆ alkyl or C₆₋₁₀ aryl. In some embodiments, R³ is for each occurrence independently selected from methyl, ethyl, (2-hydroxy)ethyl, n-propyl or (1-hxdroxy)prop-2-yl. Preferably, as described above, the carbonate groups are acyclic carbonate groups.

As used herein, acyclic carbonate groups are carbonate groups in which the two substituents bonded to the two non-carbonyl oxygen atoms of the carbonate functional group do not form a ring. In other words, acyclic carbonate ester groups as used herein are groups having the formula R⁴-O-C(O)-O-R⁵, wherein R⁴ and R⁵ do not form a ring with each other. One advantage of forming acyclic carbonate ester groups is that the solubility of the carbonate intermediate may allow the use of environmentally friendly solvents, such as water.

After formation of the carbonate intermediate, the carbonate intermediate is reacted with a diamine comprising two or more amino groups, to provide the polyurethane composition. As described, the diamine comprises two or more amino groups. Thus, the diamine can comprise exactly two amino groups or optionally even more, e.g. three amino groups or four amino groups or even more amino groups. In other words, the diamine may in some embodiments comprise or consist of a triamine. In still other words, the term "diamine" is not to be understood as a molecule comprising exactly two amino groups, but rather as a molecule (or structural unit) comprising at least two amino groups. As such, it also encompasses triamines or polyamines (having more than 3 amino groups).

In a typical embodiment, the diamine comprises two or more amino groups independently selected from primary or secondary amine. Preferably, in some embodiment, the diamine may comprise at least two primary amino groups.

Depending on the application, different diamines may be used. For example, in some embodiment, the diamine comprises two or three amino group, preferably independently selected from primary or secondary amine. In some embodiments, the diamine comprises two amino groups, preferably independently selected from primary or secondary amine. Depending on the application, different diamines may be chosen. In some embodiments, the diamine is selected from: ethylenediamine, hexamethylenediamine, diethylenetriamine, triethylenetetramine, poly(lysine), poly(ethyleneimine) or a mixture thereof. In some embodiments, the diamine is an aliphatic diamine, such as preferably a C₂₋₈ alkylene diamines. For example, the diamine may have the formula H₂N-(CH₂)_{y}-NH₂, wherein y is selected from 2 to 8 (i.e. 2, 3, 4, 5, 6, 7 or 8), preferably 6. Preferably, the diamine may comprise or consist of hexamethylenediamine. For example, in some embodiments, the diamine comprises at least 20 wt.-%, preferably at least 50 wt.-%, more preferably at least 75 wt.-%, e.g. at least 95 wt.-%, hexamethylenediamine with respect to the total weight of the diamine.

The disclosure further provides the use of a polyphenol extract in a process for producing a polyurethane composition. In particular, the disclosure also provides the use of a polyphenol extract selected from a tannin extract (preferably having a dry weight content of carbohydrates of at least 5 wt.-%), a lignin extract or a mixture thereof, in a process for producing a polyurethane composition, particularly a non-isocyanate polyurethane composition. In some embodiments, the disclosure provides the use of a tannin extract having a dry weight content of carbohydrates of at least 5 wt.-%, in a process for producing a polyurethane composition, particularly a non-isocyanate polyurethane composition. Further, the disclosure provides the use of a lignin extract in a process for producing a polyurethane composition, particularly a non-isocyanate polyurethane composition. All embodiments of the polyphenol extract (particularly of the tannin extract and the lignin extract) described herein in the context of the process are generally also embodiments of the use described in this paragraph, unless clearly indicated otherwise or unless the context dictates otherwise.

### Polyurethane Composition and Adhesive Formulation

The present disclosure further provides in a second aspect, among other aspects and embodiments, a polyurethane composition produced according to the process of any of the embodiments of the process described herein.

The process described herein leads to formation of a polyurethane composition. At least in some embodiments, the polyurethane composition may also be labelled as polyurethane resin. Depending on the application, the polyurethane composition produced according to any of the process embodiments disclosed herein may have different physical and mechanical properties. In a typical embodiment, the polyurethane composition is water soluble. In some embodiments, up to 50 wt.-% polyurethane composition can be dissolved in water to form a stable solution with no phase separation.

It was also found that in a typical embodiment, the polyurethane composition produced by the process described herein tends to have a relatively low viscosity. For example, in some embodiments, the polyurethane composition has a viscosity of less than 5 Pa*s, preferably less than 2 Pa*s. Typically, the viscosity is at least 0.05 Pa*s, e.g. in the range from 0.06 Pa*s to 2 Pa*s.

Depending on the application, the viscosity may optionally even be lower than that. For example, in some embodiments, the polyurethane composition has a viscosity of less than 1.5 Pa*s, such as in a range from 0.2 Pa*s to 1.4 Pa*s. These embodiments may for example relate to polyurethane compositions that comprise tannin, e.g. polyurethane compositions made from a polyphenol extract comprising at least 50 wt.-% (or at least 75 wt.-%) tannin extract, preferably made from a polyphenol extract consisting of a tannin extract. In further embodiments, the polyurethane composition has a viscosity of less than 0.6 Pa*s, such as in a range from 0.2 Pa*s to 0.6 Pa*s. These embodiments may for example relate to polyurethane compositions that comprise lignin, e.g. polyurethane compositions made from a polyphenol extract comprising at least 50 wt.-% (or at least 75 wt.-%) lignin extract, preferably made from a polyphenol extract consisting of lignin extract. The ranges provided in this paragraph and in the previous paragraph may optionally refer to the viscosity at a shear rate of 1.0 s⁻¹.

In a typical embodiment, the polyurethane compositions are non-Newtonian liquids. In some embodiments, the polyurethane composition has a viscosity of less than 1.0 Pa*s, preferably less than 0.6 Pa*s, at a shear rate of 10.0 s⁻¹. In some embodiments, the polyurethane composition has a viscosity in a range from 0.30 to 0.60 Pa*s at a shear rate of 10.0 s⁻¹. In some embodiments, the polyurethane composition has a viscosity of less than 0.50 Pa*s, preferably in a range from 0.05 Pa*s to 0.45 Pa*s, at a shear rate of 80 s⁻¹.

It is understood that the viscosities provided herein typically refer to a temperature of 25 °C.

The polyurethane composition of the present disclosure is produced according to the process of any of the embodiments of the process described herein. Thus, it is understood that certain features and embodiments of the process are also manifested in the polyurethane composition. As an example, because the polyurethane composition is made from the process described herein, the chemical composition of the polyurethane composition can be deduced from the process. For example, it is understood that the polyurethane composition comprises the polyphenol extract and the diamine in a reacted form. More specifically, the polyurethane composition comprises a plurality of polyurethane groups covalently interconnecting the polyphenol extract and the diamine units.

Depending on the application, different moieties of the polyphenol extract may have reacted with the carbonating agent respectively with the diamine in the process. Depending on which moieties have undergone these reactions, different polyurethane links may be present in the polyurethane composition. For example, in some embodiments, the polyphenol extract, particularly the tannin extract, comprises a plurality of carbohydrates which may undergo the reactions with the carbonating agent and, subsequently, with the diamine (as described above, preferably, at least some of these carbohydrates are bound carbohydrates). In these embodiments, for example, the polyurethane composition may comprise a plurality of urethane groups each covalently interconnecting the carbohydrates of the polyphenol extract (particularly of the tannin extract) and the diamine units.

The embodiments described in the previous paragraph may apply in particular to embodiments in which the polyphenol extract comprises or consists of a tannin extract. They may optionally also apply to embodiments in which the polyphenol extract comprises a lignin extract. For example, the lignin extract may also comprise carbohydrates bearing hydroxyl groups that may undergo the reaction with the carbonating agent and, subsequently, with the diamine. In these embodiments, the polyurethane composition may comprise a plurality of urethane groups each covalently interconnecting the carbohydrates of the lignin extract and the diamine units. However, in the case of lignin extract, it is also possible that at least some of the hydroxyl groups undergoing these reactions may in some embodiments be hydroxyl groups of the propyl units of the propyl phenol units of the lignin extract. In some embodiments, therefore, the polyurethane composition may comprise a plurality of urethane groups each covalently interconnecting a propyl unit of the propyl phenol units of the lignin extract and the diamine units. It is understood that both embodiments may also apply jointly (i.e. some hydroxyl groups of carbohydrates of the lignin undergo reaction, as well as some hydroxyl groups of the propyl units of the propyl phenol units of lignin).

In general, in a typical embodiment of the process disclosed herein, the polyphenol extract comprises a plurality of aliphatic hydroxyl groups that undergo the reaction with the carbonating agent and, subsequently, with the diamine. Therefore, in a typical embodiment, the polyphenol extract comprises a plurality of urethane groups whose non-carbonyl oxygen atom is bonded to an sp3-hybridized carbon atom. Preferably, the non-carbonyl oxygen atom of at least 20%, preferably at least 50%, more preferably at least 75%, e.g. at least 95%, of the urethane groups in the polyurethane composition is bonded to an sp3-hybridized carbon atom.

In some embodiments, in the polyurethane composition, less than 70%, preferably less than 50%, more preferably less than 30%, even more preferably less than 20%, such as less than 10%, e.g. less than 5%, for example less than 1%, of the urethane groups in the polyurethane composition are with their non-carbonyl oxygen atom directly bonded to an aromatic ring. Alternatively or in combination, preferably, the polyurethane composition comprises a polyphenol (e.g. a tannin and/or a lignin), in which less than 70%, preferably less than 50%, more preferably less than 30%, even more preferably less than 20%, such as less than 10%, e.g. less than 5%, for example less than 1%, of the phenolic hydroxyl groups have been replaced by a urethane group or a carbonate group. In some embodiments in which the tannin extract comprises condensed tannins, for example, the polyurethane composition comprises condensed tannins, in which less than 70%, preferably less than 50%, more preferably less than 30%, even more preferably less than 20%, such as less than 10%, e.g. less than 5%, for example less than 1%, of the phenolic hydroxyl groups of the condensed tannins have been replaced by a urethane group or a carbonate group.

It is further understood that the diamine units in the polyurethane composition derive from the diamine used in the process described herein. Preferably, as described above in the context of the process, the diamine units derive from the following diamines: ethylenediamine, hexamethylenediamine, diethylenetriamine, triethylenetetramine, poly(lysine), poly(ethyleneimine) or a mixture thereof. In some embodiments, the diamine is an aliphatic diamine, such as preferably a C₂₋₈ alkylene diamines. For example, the diamine may have the formula H₂N-(CH₂)_{y}-NH₂, wherein y is selected from 2 to 8 (i.e. 2, 3, 4, 5, 6, 7 or 8), preferably 6. Preferably, the diamine units derive from hexamethylenediamine.

Depending on the application, the carbonate intermediate obtained after reacting the polyphenol extract with the carbonating agent may optionally be isolable. Thus, the present disclosure further provides a carbonated composition based on polyphenol extracts wherein at least a portion of the hydroxyl groups in the polyphenol extracts have been replaced by carbonate groups. Preferably, a portion of the aliphatic hydroxyl groups in the polyphenol extracts have been replaced by carbonate groups. Even more preferably, a portion of the aliphatic hydroxyl groups of carbohydrates of the polyphenol extract (e.g. the tannin extract) have been replaced by carbonate groups.

In some embodiments of the carbonated composition, the phenolic hydroxyl groups of the polyphenol extracts have not been carbonated. In some embodiments of the carbonated composition, less than 50%, preferably less than 30%, more preferably less than 20%, even more preferably less than 10%, such as less than 5%, of the phenolic hydroxyl groups have been replaced by carbonate groups.

The present disclosure further provides in a third aspect, among other aspects and embodiments, an adhesive formulation. The adhesive formulation comprises the polyurethane composition according to any of the embodiments described herein.

In some embodiments, the adhesive formulation further comprises a hardener, preferably an epoxy-based hardener and/or an aldehyde-based hardener. For example, the epoxy-based hardener may be selected from one or more of the following: linear poly(propylene glycol) diglycidyl ether (PPGDG), glycerol diglycidyl ether, poly(ethyleneglycol) diglycidyl ether, glyoxal 5-hydroxymethylfurfural (5-HMF) and/or branched epoxy trimethylpropane triglycidyl ether (TMPTG). In some embodiments, the hardener comprises at least two epoxide groups, for example from two to four epoxide groups, and/or at least one aldehyde group.

In some embodiments, the adhesive formulation further comprises a plasticizer, preferably selected from glycerol, propylene glycol, propylene carbonate or a mixture thereof.

Depending on the presence or absence of hardeners, the adhesive formulation may have different cure temperatures. In some embodiments, the polyurethane composition has a cure temperature from 60 °C to 200 °C, preferably from 80 °C to 150 °C.

### Uses

The present disclosure further provides in a fourth aspect, among other aspects and embodiments, different uses of the polyurethane composition described herein.

For example, in some embodiments, the polyurethane composition may be used as an adhesive, preferably as a structural adhesive or a non-structural adhesive.

In some embodiments, the polyurethane composition is used as a foam, preferably as an insulation foam.

In some embodiments, the polyurethane composition is used as a glass wool, preferably as an insulation glass wool.

In some embodiments, the polyurethane composition is used as a paint or paint additive.

In some embodiments, the polyurethane composition is used as a coating, preferably a surface coating.

In some embodiments, the polyurethane composition is used in injection-molding.

In some embodiments, the polyurethane composition is used as an ink in additive manufacturing.

Preferred uses of the polyurethane composition include the use of the polyurethane composition as a foam, preferably as an insulation foam, and/or the use as a glass wool, preferably as an insulation glass wool.

The present disclosure further provides different uses of the adhesive formulation described herein. For example, in some embodiments, the adhesive formulation according to any of the embodiments described herein may be used in the production of wood-based materials, such as wood-based particleboards. For example, the adhesive formulation may be used in the production of medium or light weight wood-based particleboards.

One advantage of the adhesive formulation is that it may be used for a broad range of applications. For example, in some embodiments, the adhesive formulation is used as a structural adhesive and/or as a non-structural adhesive. In particular, since the adhesive formulation is, at least in some embodiments, water soluble, it can be used as non-structural adhesive, thus allowing the replacement of petroleum-based adhesives such as urea-formaldehyde or phenol-formaldehyde.

The present disclosure is discussed in the context of different aspects and embodiments to facilitate understanding of the disclosure. However, the present document is to be understood as a unified disclosure. In particular, although some embodiments are discussed in the context of a particular aspect, they are nevertheless to be understood generally as embodiments of the present disclosure and, as such, generally also extend to and apply to other aspects of the present disclosure, unless it is clearly specified otherwise or unless the context dictates otherwise. For example, embodiments discussed in the context of the process of the first aspect are in general also embodiments of the other aspects, in particular also of the polyurethane composition of the second aspect, unless it is clearly specified otherwise or unless the context dictates otherwise. It is understood that the process involves chemical reactions which may change certain characteristics or features of the starting materials used compared to the product obtained.

### EXAMPLES

### Example 1: Producing polyurethane compositions from tannin extracts

In the following, an example of the process for producing a polyurethane composition according to the disclosure is provided.

The following table summarizes the raw materials used to produce the polyurethane composition:

| | Molar mass (g) | eq | mol | mmol | mass (g) | mL |
|---|---|---|---|---|---|---|
| Tannin extract / powder | 342.3 | 1 | 0.044 | 43.821 | 15.000 | |
| Dimethylcarbonate | 90.08 | 2.5 | 0.110 | 109.553 | 9.869 | 9.2836654 |
| water | 18 | 55.5 | 2.432 | 2432.077 | 43.777 | 43.777388 |
| Hexamethylene diamine | 116.21 | 1.25 | 0.055 | | 6.366 | |
| Hexamethylene diamine 70wt% | | | | | 9.093 | |
| K2CO3 | 138 | 0.1 | 0.004 | | 0.605 | |

The tannin extract was produced by the BFH after hot water extraction of Spruce bark using the extraction protocol described in S. Bianchi et al., "Characterization of condensed tannins and carbohydrates in hot water bark extracts of European softwood species", Phytochemistry 2015, 120, 53. Tannin powder was obtained after freeze-drying the liquid extract.

The process involves the following steps:
First part of the process:
   1.- In a 250 mL round bottom flask containing a magnetic stirrer, 43.77 gr of water were introduced and warmed at 65°C (thermostat).
   2.- Then, 0.6 g of potassium carbonate (K₂CO₃) were added.
   3.- Once dissolved, 15 g of the tannin extract were added slowly.
   4.- Once dissolved, 9.86 g of DMC were added, and the mixture was kept under stirring for 1h at 65°C (thermostat) with a condenser.
   5.- After the reaction, the mixture was cooled down to r.t. using an ice bath.
Second part of the process:
   1.- at room temp and while stirring, 18.18 g of a hexamethylene diamine solution (35 wt%) was added slowly to the mixture.
   2.- After addition of hexamethylene diamine, the mixture was heated at 85°C (thermostat) and cooked for 1h.
   3.- After the reaction, the round bottom flask was removed from the oil bath, closed with cap and allowed to cool at room temperature.

**Fig.** 1 shows an FTIR stacking of the tannin extract used (throughgoing line) and of the tannin-based NIPU produced according to the process described above (dashed line). The FTIR stacking proofs that urethane linkages were formed, selected peaks of which are highlighted in the figure.

**Fig.** 4 shows the viscosity as a function of shear rate measured for the tannin-based NIPU prepared according to example 1 (black through-going line) and for the lignin-based NIPU prepared according to example 2 (see below, grey dashed line). The graph illustrates that the non-linear behavior is particularly pronounced for tannin-based NIPU compared to the lignin-based NIPU.

### Example 2: Producing polyurethane compositions from lignin extracts

In the following, two examples of the process for producing a polyurethane composition according to the disclosure are provided.

### a) Using Soda Lignin

The following table summarizes the raw materials used to produce the polyurethane composition:

| | Molar mass (g) | eq | mol | mmol | mass (g) |
|---|---|---|---|---|---|
| Protobind^{™} 1000 (PB1000) | 3333.3 | 1 | 0.0015 | 1.5 | 4.99995 |
| H2O | 18 | | 0 | 0 | 14 |
| DMC | 90.08 | 25 | 0.0375 | 37.5 | 3.378 |
| NaOH | 39.99 | 15 | 0.0225 | 22.5 | 0.899775 |
| NaOH 50wt% | 116.21 | | | | 1.79955 |
| Hexamethylene diamine | | 12.5 | 0.01875 | 18.75 | 2.1789375 |
| Hexamethylene diamine 70wt% | | | | | 3.1127679 |

The lignin extract used was the commercially available product "protobind^{™} 1000 (PB1000)", as provided by PLT innovations / Tanovis. It is a sulfur free aromatic biopolymer obtained from soda pulping of annual fibers such as wheat straw.

The process involves the following steps:
First part of the process:
   1.-14 g of water and 1.8 g of NaOH (50wt%) were introduced in a 100 mL round bottom flask with a magnetic stirrer and heated at 70°C thermostat using a water cooling.
   2.-Once at 70°C, 5 g of lignin PB1000 were added (lignin was added part by part).
   3,- Once the lignin is well dissolved, 3.37 g of dimethyl carbonate (DMC) were added, and the mixture was stirred at 350 rpm for 1h at 70°C. A condenser was used to avoid water evaporation.
   4.- After the reaction, the mixture was cooled down to r.t. using an ice bath.
Second part of the process:
   1.- at room temp and while stirring, 3.11 g of an hexamethylene diamine solution (70 wt%) was added slowly to the mixture.
   2.- After addition of hexamethylene diamine, the mixture was heated at 90°C (thermostat) and stirred for 1 h at 350 rpm. An aluminum foil was placed over the reaction and around the coil and a condenser was used to avoid water evaporation.
   3.- After the reaction, the round bottom flask was removed from the oil bath, closed with cap and allowed to cool at room temperature.
   4.- The solid content was determined by drying 1g in the rotary evaporator and the FTIR was measured subsequently.

Fig. 2 shows an FTIR stacking of the soda lignin extract used (abbreviated in the figure as "PB1000"; black through-going line), of the carbonate intermediate formed during the process described above (which was isolated by precipitation in acetone after the first step; grey through-going line), and of the lignin-based NIPU produced according to the process described above (black dotted line). The FTIR stacking proofs that urethane linkages were formed, selected peaks of which are highlighted in the figure. The FTIR stackings also provide proof of the successful formation of a carbonate intermediate.

### b) Using Kraft Lignin

The same process described for soda lignin above (see a)) has also be performed using kraft lignin (from UPM Biochemicals) instead of soda lignin.

**Fig.** 5 shows an FTIR stacking of the kraft lignin extract used (abbreviated in the figure as "UPM"; black through-going line), of the carbonate intermediate formed during the process described above (grey through-going line), and of the lignin-based NIPU produced according to the process described above (black dotted line). The FTIR stacking proofs that urethane linkages were formed, selected peaks of which are highlighted in the figure. The FTIR stackings also provide proof of the successful formation of a carbonate intermediate.

### Example 3: Screening of different hardeners

A number of different hardeners were tested in conjunction with the tannin-based NIPU produced according to the method described herein. The hardeners tested included epoxides and aldehydes. The names and chemical structures of the hardeners tested are shown in **Fig.** 3a. **Fig. 3b** shows the differential scanning calorimetry (DSC) thermograms, which were performed using stainless steel high-pressure pans (30 microliter) for the different formulations indicated in Fig. 3b (all weight percent indications in Fig. 3b are relative to the solid content).

The screening revealed that different hardeners and formulations can be used to tune the cure temperature, as may be desired for a given application. Thus, cure temperatures spanning from 80 to 150°C could be achieved.

## Claims

1. Process for producing a polyurethane composition, comprising the steps of:
a. Providing a polyphenol extract selected from a tannin extract, a lignin extract or a mixture thereof;
b. Reacting the polyphenol extract with a carbonating agent to provide a carbonate intermediate;
c. Reacting the carbonate intermediate with a diamine comprising two or more amino groups, to provide the polyurethane composition.

2. Process according to claim 1, **wherein** the tannin extract has a dry weight content of carbohydrates of at least 5 wt.-%, e.g. at least 10 wt.-%, preferably from 10 wt.- % to 70 wt.-%, more preferably from 15 wt.-% to 50 wt.-%.

3. Process according to any one of the previous claims, **wherein** the tannin extract has a dry weight content of bound carbohydrates of at least 3 wt.-%, preferably from 5 wt.-% to 70 wt.-%, more preferably from 5 wt.-% to 55 wt.-%, even more preferably from 8 wt.-% to 50 wt.-%.

4. Process according to any one of the previous claims, **wherein** the tannin extract comprises bound carbohydrates and free carbohydrates in a ratio by weight of at least 1:5, preferably at least 1:3, more preferably from 1:3 to 20:1, even more preferably from 1:2 to 10:1.

5. Process according to any one of the previous claims, **wherein** the tannin extract is an extract of a softwood species, preferably a softwood species selected from one or more of the following: Silver fir (*Abies albai*)*,* European larch (*Larix decidua*), Norway spruce (*Picea abies*), Douglas fir (*Pseudotsuga menziesii*) or Scots pine *(Pinus sylvestris).*

6. Process according to any one of the previous claims, **wherein** the lignin extract comprises Kraft lignin, Soda lignin or a mixture thereof.

7. Process according to any one of the previous claims, **wherein** step b) and/or step c) are at least partially performed in a polar solvent, preferably in a polar protic solvent, more preferably in water.

8. Process according to any one of the previous claims, **wherein** at least 5%, preferably at least 10%, more preferably at least 25%, even more preferably at least 50%, even more preferably at least 75%, particularly at least 90%, of all hydroxyl groups that are carbonated in step b) are aliphatic hydroxyl groups.

9. Polyurethane composition produced according to the process of any one of the previous claims.

10. Polyurethane composition according to claim 9, **wherein** the polyurethane composition is soluble in water.

11. Polyurethane composition according to any one of claims 9-10, **wherein** the polyurethane composition has a viscosity of less than 5 Pa*s, preferably less than 2 Pa*s.

12. Polyurethane composition according to any one of claims 9-11, **wherein** the polyurethane composition is free of isocyanate.

13. Use of the polyurethane composition according to any one of claims 9-12:
a. as an adhesive, preferably as a structural adhesive or a non-structural adhesive; and/or
b. as a foam, preferably as an insulation foam; and/or
c. as a glass wool, preferably as an insulation glass wool; and/or
d. as a paint or paint additive; and/or
e. as a coating, preferably a surface coating; and/or
f. in injection-molding; and/or
g. as an ink in additive manufacturing.

14. Adhesive formulation comprising the polyurethane composition according to any one of claims 9-12.

15. Use of the adhesive formulation according to claim 14 in the production of wood-based materials, preferably wood-based particleboards, more preferably medium or light weight particleboards.
